# EUROPEAN PATENT APPLICATION

(11) **EP 3 112 648 A1**
(43) Date of publication of application: **04.01.2017**
(21) Application number: 16174068.3
(22) Date of filing: 10.06.2016
(51) Int. Cl.: F02K 3/06, F02C 3/107, F02C 7/36

(54) **GAS TURBINE ENGINE WITH GEARED ARCHITECTURE**

(30) Priority: 29.06.2015 US 201514753048
(71) Applicant: United Technologies Corporation, Farmington, CT 06032 (US)
(72) Inventor: McCUNE, Michael E., Colchester, CT Connecticut 06415 (US); PORTLOCK, Lawrence E., Bethany, CT Connecticut 06524 (US); SCHWARZ, Frederick M., Glastonbury, CT Connecticut 06033 (US)
(74) Representative: Hull, James Edward

(57) **Abstract**

A geared architecture (22) for a gas turbine engine (10) comprises a fan shaft (20) and a fan (18) supported on the fan shaft (20) and defining a bypass flow ratio greater than six. A frame (108) supports the fan shaft (20). A gear system (100) drives the fan shaft (20). The gear system (100) has a gear reduction ratio of greater than or equal to about 2.3. A torque frame (28) at least partially supports the gear system (100). An input (102) is coupled to the gear system (100). A downstream turbine (27a) is coupled to rotatably drive the input coupling (102). The downstream turbine (27a) defines a pressure ratio that is greater than five.

## Description

### BACKGROUND OF THE INVENTION

This invention relates to a ring gear used in an epicyclic gear train of a gas turbine engine.

Gas turbine engines typically employ an epicyclic gear train connected to the turbine section of the engine, which is used to drive the turbo fan. In a typical epicyclic gear train, a sun gear receives rotational input from a turbine shaft through a compressor shaft. A carrier supports intermediate gears that surround and mesh with the sun gear. A ring gear surrounds and meshes with the intermediate gears. In arrangements in which the carrier is fixed against rotation, the intermediate gears are referred to as "star" gears and the ring gear is coupled to an output shaft that supports the turbo fan.

Typically, the ring gear is connected to the turbo fan shaft using a spline ring. The spline ring is secured to a flange of the turbo fan shaft using circumferentially arranged bolts. The spline ring includes splines opposite the flange that supports a splined outer circumferential surface of the ring gear. The ring gear typically includes first and second portions that provide teeth facing in opposite directions, which mesh with complimentary oppositely facing teeth of the star gears.

An epicyclic gear train must share the load between the gears within the system. As a result, the splined connection between the ring gear and spline ring is subject to wear under high loads and deflection. Since the spline connection requires radial clearance, it is difficult to get a repeatable balance of the turbo fan assembly. Balance can also deteriorate over time with spline wear.

### SUMMARY

In a featured embodiment, a geared architecture for a gas turbine engine comprises a fan shaft and a fan supported on the fan shaft and defining a bypass flow ratio greater than about six. A frame supports the fan shaft. A gear system drives the fan shaft. The gear system has a gear reduction ratio of greater than or equal to about 2.3. A torque frame at least partially supports the gear system. An input is coupled to the gear system. A downstream turbine is coupled to rotatably drive the input coupling. The downstream turbine defines a pressure ratio that is greater than about five.

In another embodiment according to the previous embodiment, the frame and the torque frame are mounted to a fixed structure.

In another embodiment according to any of the previous embodiments, the frame and the torque frame are mounted to a front center body of a gas turbine engine.

In another embodiment according to any of the previous embodiments, the torque frame is mounted to a carrier of the gear system.

In another embodiment according to any of the previous embodiments, the input coupling is mounted to a sun gear of the gear system.

In another embodiment according to any of the previous embodiments, the fan shaft is mounted to a ring gear of the gear system.

In another embodiment according to any of the previous embodiments, the gear system is a star system.

In another embodiment according to any of the previous embodiments, the gear system is an epicyclic gear train.

In another embodiment according to any of the previous embodiments, the bypass flow ratio is greater than about ten.

In another embodiment according to any of the previous embodiments, the gear reduction ratio is greater than or equal to about 2.5.

In another embodiment according to any of the previous embodiments, the gear system includes a carrier supporting intermediate gears that mesh with a sun gear. A ring gear surrounds and meshes with the intermediate gears. Each of the intermediate gears is supported on a respective journal bearing.

In another embodiment according to any of the previous embodiments, the input coupling is coupled to the sun gear and the fan shaft is coupled to the ring gear.

In another embodiment according to any of the previous embodiments, there are three turbine rotors, with the downstream turbine being a most downstream of the three turbine rotors.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a partial cross-sectional view of a front portion of a gas turbine engine illustrating a turbo fan, epicyclic gear train and a compressor section.
Figure 2 is an enlarged cross-sectional view of the epicyclic gear train shown in Figure 1.
Figure 3 is an enlarged cross-sectional view of an example ring gear similar to the arrangement shown in Figure 2.
Figure 4 is a view of the ring gear shown in Figure 3 viewed in a direction that faces the teeth of the ring gear in Figure 3.
Figure 5 shows another embodiment.
Figure 6 shows yet another embodiment.

### DETAILED DESCRIPTION

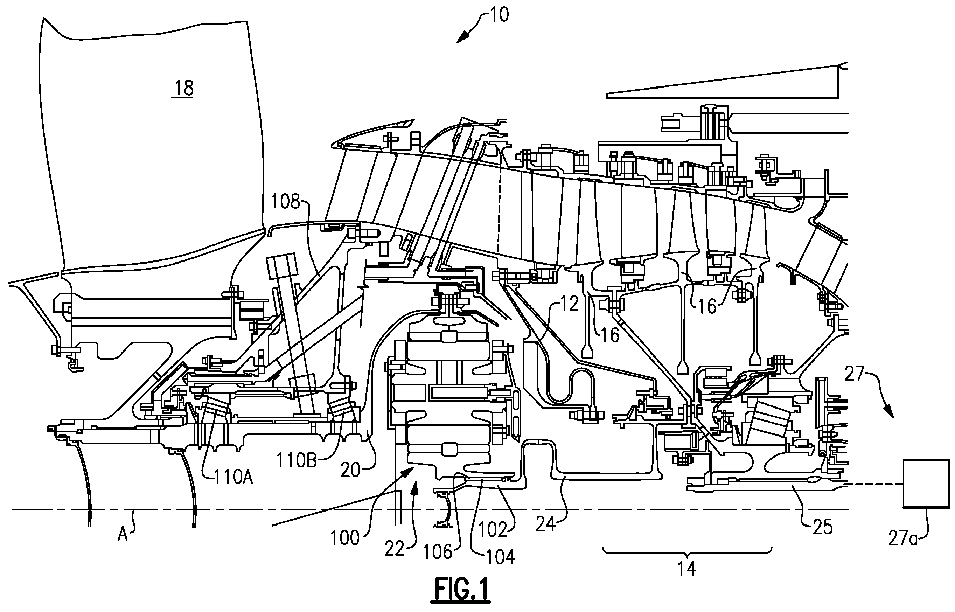

A portion of a gas turbine engine 10 is shown schematically in Figure 1. The turbine engine 10 includes a fixed housing 12 that is constructed from numerous pieces secured to one another. A compressor section 14 having compressor hubs 16 with blades are driven by a turbine shaft 25 about an axis A. A turbo fan 18 is supported on a turbo fan shaft 20 that is driven by a compressor shaft 24, which supports the compressor hubs 16, through an epicyclic gear train 22. The engine 10 is a high-bypass geared architecture aircraft engine. In one disclosed, non-limiting embodiment, the engine 10 bypass ratio is greater than about six to ten, the gear train 22 is an epicyclic gear train such as a planetary gear system or other gear system with a gear reduction ratio of greater than about 2.3 and the low pressure turbine 18 has a pressure ratio that is greater than about 5. The engine 10 in one non-limiting embodiment is a high-bypass geared architecture aircraft engine. In one disclosed embodiment, the engine 10 bypass ratio is greater than ten, the turbofan diameter is significantly larger than that of the low pressure compressor 16, and the low pressure turbine 27a (shown schematically) has a pressure ratio that is greater than 5:1. As understood, the low pressure turbine 27a is downstream of at least one upstream, or high pressure turbine. The gear train 22 may be an epicycle gear train such as a planetary gear system or other gear system with a gear reduction ratio of greater than 2.5:1. It should be understood, however, that the above parameters are only exemplary of one embodiment of a geared architecture engine.

A significant amount of thrust is provided by the bypass flow B due to the high bypass ratio. The fan 18 of the engine 10 is designed for a particular flight condition -- typically cruise at about 0.8M and about 35,000 feet (10,668 m). The flight condition of 0.8 M and 35,000 ft (10,668 m), with the engine at its best fuel consumption - also known as "bucket cruise TSFC" - is the industry standard parameter of lbm of fuel being burned divided by lbf of thrust the engine produces at that minimum point. "Low fan pressure ratio" is the pressure ratio across the fan blade alone, without the FEGV system 36. The low fan pressure ratio as disclosed herein according to one non-limiting embodiment is less than 1.45. "Low corrected fan tip speed" is the actual fan tip speed in ft/sec divided by an industry standard temperature correction of [(Tambient deg R) / 518.7)^0.5] (where deg R = K x ⁹/₅). The "Low corrected fan tip speed" as disclosed herein according to one non-limiting embodiment is less than 1150 ft / second (351 m/s).

The gear train 22 generally includes a fan drive gear system (FDGS) 100 driven by the compressor shaft 24 through an input coupling 102. The input coupling 102 both transfers torque from the compressor shaft 24 to the gear train 22 and facilitates the segregation of vibrations and other transients therebetween.

The input coupling 102 may include an interface spline 102 joined, by a gear spline 106, to the sun gear 30. The sun gear 30 is in meshed engagement with multiple star gears 32. Each star gear 32 is also in meshed engagement with rotating ring gear 38 that is mechanically connected to the fan shaft 20. Since the star gears 32 mesh with both the rotating ring gear 38 as well as the rotating sun gear 30, the star gears 32 rotate about their own axes to drive the ring gear 38. The rotation of the ring gear 38 is conveyed to the fan 20 through the fan shaft 20 to thereby drive the fan 18 at a lower speed than the turbine shaft 25.

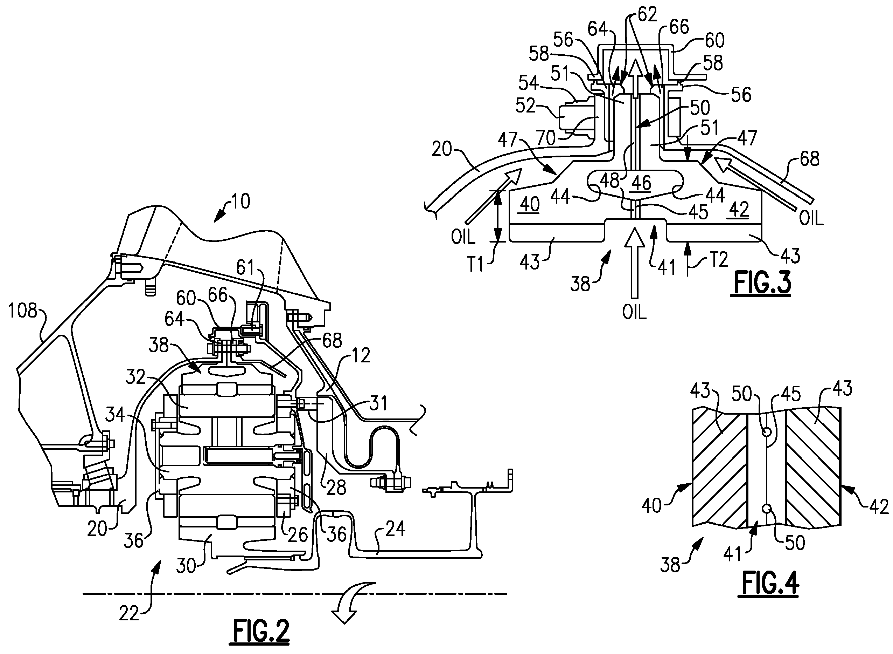

In the example arrangement shown, the epicyclic gear train 22 is a star gear train. Referring to Figure 2, the epicyclic gear train 22 includes the sun gear 30 that is connected to the compressor shaft 24, which provides rotational input, by the splined connection. A carrier 26 is fixed to the housing 12 by a torque frame 28 using fingers (not shown) known in the art. The carrier 26 supports star gears 32 using journal bearings 34 that are coupled to the sun gear 30 by meshed interfaces between the teeth of sun and star gears 30, 32. Multiple star gears 32 are arranged circumferentially about the sun gear 30. Retainers 36 retain the journal bearings 34 to the carrier 26. A ring gear 38 surrounds the carrier 26 and is coupled to the star gears 32 by meshed interfaces. The ring gear 38, which provides rotational output, is secured to the turbo fan shaft 20 by circumferentially arranged fastening elements, which are described in more detail below.

The torque frame 28 supports the carrier 26 with respect to the housing 12 such as a front center body which facilitates the segregation of vibrations and other transients therebetween. It should be understood that various gas turbine engine case structures may alternatively or additionally be provided.

The fixed housing 12 may further include a number 1 and 1.5 bearing support frame 108 which is commonly referred to as a "K-frame" which supports the number 1 and number 1.5 bearing systems 110A, 110B to support the fan shaft 20 (Figure 1). The number 1 and number 1.5 bearing systems 110A, 110B may include tapered roller bearings which provide a line contact.

Referring to Figures 3 and 4, the ring gear 38 is a two-piece construction having first and second portions 40, 42. The first and second portions 40, 42 abut one another at a radial interface 45. A trough 41 separates oppositely angled teeth 43 (best shown in Figure 4) on each of the first and second portions 40, 42. The arrangement of teeth 43 forces the first and second portions 40, 42 toward one another at the radial interface 45. The back side of the first and second portions 40, 42 includes a generally S-shaped outer circumferential surface 47 that, coupled with a change in thickness, provides structural rigidity and resistance to overturning moments. The first and second portions 40, 42 have a first thickness T1 that is less than a second thickness T2 arranged axially inwardly from the first thickness T1. The first and second portions 40, 42 include facing recesses 44 that form an internal annular cavity 46.

The first and second portions 40, 42 include flanges 51 that extend radially outward away from the teeth 43. The turbo fan shaft 20 includes a radially outwardly extending flange 70 that is secured to the flanges 51 by circumferentially arranged bolts 52 and nuts 54, which axially constrain and affix the turbo fan shaft 20 and ring gear 38 relative to one another. Thus, the spline ring is eliminated, which also reduces heat generated from windage and churning that resulted from the sharp edges and surface area of the splines. The turbo fan shaft 20 and ring gear 38 can be rotationally balanced with one another since radial movement resulting from the use of splines is eliminated. An oil baffle 68 is also secured to the flanges 51, 70 and balanced with the assembly.

Seals 56 having knife edges 58 are secured to the flanges 51, 70. The first and second portions 40, 42 have grooves 48 at the radial interface 45 that form a hole 50, which expels oil through the ring gear 38 to a gutter 60 that is secured to the carrier 26 with fasteners 61 (Figure 2). The direct radial flow path provided by the grooves 48 reduces windage and churning by avoiding the axial flow path change that existed with splines. That is, the oil had to flow radially and then axially to exit through the spline interface. The gutter 60 is constructed from a soft material such as aluminum so that the knife edges 58, which are constructed from steel, can cut into the aluminum if they interfere. Referring to Figure 3, the seals 56 also include oil return passages 62 provided by first and second slots 64 in the seals 56, which permit oil on either side of the ring gear 38 to drain into the gutter 60. In the example shown in Figure 2, the first and second slots 64, 66 are instead provided in the flange 70 and oil baffle 68, respectively.

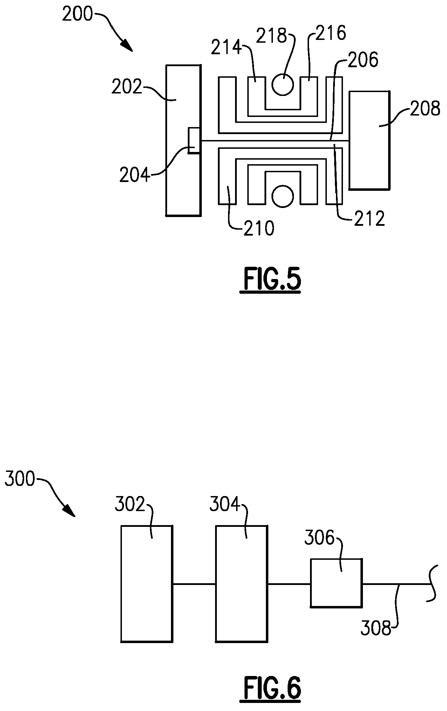

Figure 5 shows an embodiment 200, wherein there is a fan drive turbine 208 driving a shaft 206 to in turn drive a fan rotor 202. A gear reduction 204 may be positioned between the fan drive turbine 208 and the fan rotor 202. This gear reduction 204 may be structured and operate like the gear reduction disclosed above. A compressor rotor 210 is driven by an intermediate pressure turbine 212, and a second stage compressor rotor 214 is driven by a turbine rotor 216. A combustion section 218 is positioned intermediate the compressor rotor 214 and the turbine section 216.

Figure 6 shows yet another embodiment 300 wherein a fan rotor 302 and a first stage compressor 304 rotate at a common speed. The gear reduction 306 (which may be structured as disclosed above) is intermediate the compressor rotor 304 and a shaft 308 which is driven by a low pressure turbine section.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A geared architecture (22) for a gas turbine engine (10) comprising:
a fan shaft (20) and a fan (18) supported on said fan shaft (20) and defining a bypass flow ratio greater than six;
a frame (108) which supports said fan shaft (20);
a gear system (100) which drives said fan shaft (20), said gear system (100) having a gear reduction ratio of greater than or equal to about 2.3;
a torque frame (28) which at least partially supports said gear system (100);
an input coupling (102) to said gear system (100); and
a downstream turbine (27a) coupled to rotatably drive said input coupling (102), said downstream turbine (27a) defining a pressure ratio that is greater than five.

2. The geared architecture (22) as recited in claim 1, wherein said frame (108) and said torque frame (28) are mounted to a fixed structure (12).

3. The geared architecture (22) as recited in claim 1 or 2, wherein said frame (108) and said torque frame (28) are mounted to a front center body of a gas turbine engine (10).

4. The geared architecture (22) as recited in claim 1, 2 or 3, wherein said torque (28) frame is mounted to a carrier (26) of said gear system (100).

5. The geared architecture (22) as recited in any preceding claim, wherein said input coupling (102) is mounted to a sun gear (30) of said gear system (100).

6. The geared architecture (22) as recited in any preceding claim, wherein said fan shaft (20) is mounted to a ring gear of said gear (38) system (100).

7. The geared architecture (22) as recited in any preceding claim, wherein said gear system (100) is a star system.

8. The geared architecture (22) as recited in any preceding claim, wherein said gear system (100) is an epicyclic gear train.

9. The geared architecture (22) as recited in any of claims 1 to 4, wherein said gear system (100) includes a carrier (26) supporting intermediate gears (32) that mesh with a sun gear (30), and a ring gear (38) surrounding and meshing with said intermediate gears (32), each of said intermediate gears (32) being supported on a respective journal bearing (34).

10. The geared architecture (22) as recited in claim 9, wherein said input coupling (102) is coupled to the sun gear (30) and said fan shaft (20) is coupled to the ring gear (38).

11. The geared architecture (22) as recited in any preceding claim, wherein said bypass flow ratio is greater than ten.

12. The geared architecture (22) as recited in any preceding claim, wherein said gear reduction ratio is greater than or equal to about 2.5.

13. The geared architecture (22) as recited in any preceding claim, wherein there are three turbine rotors, with the downstream turbine (27a) being a most downstream of the three turbine rotors.
